(19) Europäisches Patentamt

European Patent Office

Office européen des brevets

(11) Publication number: **0 655 484 A1**

## (12) EUROPEAN PATENT APPLICATION

(21) Application number: **94203400.0**

(22) Date of filing: **22.11.94**

(51) Int. Cl.⁶: **C08L 95/00**, E01C 7/24

(30) Priority: **30.11.93 EP 93309553**

(43) Date of publication of application:
**31.05.95 Bulletin 95/22**

(84) Designated Contracting States:
**AT BE CH DE DK ES FR GB GR IE IT LI LU NL PT SE**

(71) Applicant: **SHELL INTERNATIONALE RESEARCH MAATSCHAPPIJ B.V.**
**Carel van Bylandtlaan 30**
**NL-2596 HR Den Haag (NL)**

(72) Inventor: **Kilner, David Nicholas**
**Dragons Farm,**
**Dragons Green**
**Horsham,**
**West Sussex RH13 8PD (GB)**

(54) **Road surfacing composition.**

(57) A slurry comprising aggregates of different particle size and a bituminous emulsion is suitable for use in road surfacing, and by variation of the ratio of the different aggregates can achieve a wide variety of sustainable texture depths, including texture depths greater than 1.5 mm.

EP 0 655 484 A1

The present invention relates to the use of asphalt in road surfacing, and in particular to the use of microasphalt.

The advent of polymer-modified bitumen emulsion systems did much to establish and expand the use of the cold-applied microasphalt road-surfacing technique. Today the use of microasphalt, in particular the "Ralumac" system, is well-established throughout the world as an effective maintenance system, with a very wide application tolerance and significant customer and road surface benefits.

The U.K. Department of Transport requires that any surfacing products used on roads subject to vehicle speeds in excess of 60 mph (c. 100 km/h) should have a sustainable texture depth of greater than 1.5 mm. Currently, microasphalt systems by their very nature and the way they are applied do not achieve this requirement. Therefore, the current advantages of the microasphalt systems are denied to a substantial part of the UK road network.

It would therefore be desirable to provide microasphalt in a form that is capable of achieving a sustainable texture depth of greater than 1.5 mm.

According to the present invention, a slurry comprises bituminous emulsion and relatively coarse and relatively fine aggregates that are present in relative amounts such that gaps exist between the particles of the aggregates.

The slurry can be used to surface a road, and by varying the relative amounts of the coarse and fine fractions in the slurry, a wide variety of sustainable texture depths can be achieved, including texture depths greater than 1.5 mm. Therefore the slurry of the invention has the advantage of wider applicability than previously known microasphalts.

In the following the terms "coarse" and "fine" are used to describe the relative sizes of the two kinds of aggregate included in the slurry of the invention. The coarse aggregate has a substantially uniform particle size typically of 6 mm to 20 mm, preferably 6 mm to 14 mm, and more preferably 6 mm to 10 mm. The coarse aggregates typically comprise stone, such as limestone, basalt and granite, and mixtures thereof.

The fine aggregate has a substantially uniform particle size typically of up to 3 mm, and preferably up to 2 mm. More preferably it additionally comprises material having a particle size that is greater than this and is typically up to 10 mm, and preferably up to 6 mm, which contributes to a greater mechanical strength in the resulting road surfacing. The coarse aggregate always has a greater particle size than the fine aggregate typically by at least about 4 mm. Typical examples of fine aggregates are sands, crushed limestone and crushed granite, and mixtures thereof.

By a substantially uniform particle size we mean that at least about 80% by weight, and preferably at least 90% by weight, of the particles approximate to the quoted size.

The relative amounts of the coarse and fine aggregates are an essential factor in determining the sustainable texture depth of a road surfacing made form the slurry of the invention. In order to achieve a sustainable texture depth of greater than 1.5 mm, as is preferred, the volume ratio of coarse: fine aggregate should be such that in the slurry and in the resulting road surfacing there is insufficient fine aggregate to fill totally the gaps between the coarse aggregate particles. Higher proportions of fine aggregate tend to result in lower texture depths but give microasphalts higher strength and durability.

According to the desired mechanical strength, surface texture and porosity of the resulting road surfacing the proportion of gaps in the slurry and/or road surfacing varies in the range of 3 to 25%, more preferably 5 to 25%, and more preferably 8 to 25%, by volume of the gaps existing therein in the absence of fine aggregate.

The gaps between the particles of the aggregates can be partially or wholly filled with liquid, e.g. binder, water, etc., depending on the wetness of the mix. If the slurry is relatively dry when it is applied to form a road surfacing gaps remain both in the internal structure of the surfacing and at its surface, thereby providing the desired texture depth. If, however, the slurry is relatively wet when it is applied, the liquid between the aggregates, and any fine aggregates and/or fillers mixed therewith, gravitates to the bottom of the surfacing thereby eliminating gaps in the internal structure of the surfacing but retaining gaps at its surface, and therefore texture depth. When the slurry is relatively wet greater texture depths can be achieved than when it is relatively dry.

Typically the ratio of coarse: fine aggregate in the slurry is in the range 1:10 to 10:1 by volume, preferably at least 1:1, more preferably in the range 1:1 to 6:1, and most preferably in the range of 1:1 to 4:1, provided the necessary gaps exist. The ratio is dependent on the relative sizes of the coarse and fine aggregates and/or their relative densities and/or their shapes, as each of these influences the size and number of gaps existing between the particles of the aggregates.

The bituminous emulsion can comprise any standard microasphalt bitumen emulsion or proprietary polymer-modified bitumen emulsion, for example Ralumac or Bitutex, both supplied by Colas Limited.

Typical amounts of each of the slurry components are, by volume, 55-75% of coarse aggregate, 15-25% of fine aggregate and 5-15% of bituminous emulsion.

Preferably the slurry of the invention further includes up to 10% by weight of a filler, at least 90% of the particles of which have a size of up to 100 $\mu$m, and which is smaller in particle size than the fine aggregate. A typical example of a filler is crushed limestone. The filler fills the fine gaps present between the particles of fine aggregate in the slurry, and in so doing achieves better cohesive characteristics in the applied slurry. It is important not to include too much filler as this may lead to filling of the gaps between the particles of coarse aggregate which may in turn lead to a reduction in texture depth, which is undesirable.

The slurry can be prepared by mixing all its component parts simultaneously, or preferably by mixing together the coarse and fine aggregates, the filler, if present, and any additional components, see below, prior to adding the emulsion. If the filler is present, it is preferred to mix this first with the fine aggregate, to reduce the possibility of segregation of the different particle sizes in the final mix.

A microasphalt road surfacing can be provided by applying the slurry of the invention to a road, wet-screeding and rolling it, and then allowing it to cure. The fine aggregate and the bituminous emulsion are preferably uniformly distributed throughout the applied road surfacing, rather than gravitating towards the road, which tends to be the case, particularly in heavy rainfall during or soon after application of the slurry. Such a uniform distribution creates micro-porosity in the road surfacing, which means that the surfacing will have material drainage capacity.

A uniform distribution of fine aggregate and emulsion is achieved by increasing the viscosity characteristics of the slurry either prior to or during its application. This results in the slurry having a suitable consistency for its application.

Chemical thickening agents, or thixotropes, can be used to increase this effect. These additives require a finite time to react and produce the thickening effect. They can be added with the slurry components or to the slurry just prior to its application to the road surface. An example of a suitable thickening agent is CC2X obtainable from Colas Limited.

An alternative thickening agent comprises water-absorbent "low aspect ratio" fibres, i.e. small length: diameter ratio. Typical dimensions for such fibres are up to 5 mm in length and up to 4 mm$^2$ in cross-sectional area. Suitable fibres are cellulose fibres such as Interfibre X F55 or Custom Fibres CF 31500 LR.

In addition to sustaining a uniform distribution of fine aggregate and emulsion throughout the applied road surfacing, the use of fibres as a thickening agent has also been found to impart a further strength benefit to the road surfacing. Greater strengths still can be achieved by using longer fibres, e.g. up to 60 mm in length, together with or as an alternative to the "low aspect ratio" fibres.

An alternative to using a thickening agent is to cause the bituminous emulsion to break just prior to or during its application to the road surface. The addition of breaking agents to cationic emulsions to increase their viscosity is well-known. Examples of such breaking agents include anionic emulsifiers, compounds comprising polyvalent metal ions or inorganic anions, bases, and different types of aggregates or Portland cement. Any of these can be used in the present invention, but the preferred breaking agent is an aqueous solution of sodium hydroxide (15% by weight).

The breaking agent can be added with the other component parts of the slurry, or it can be mixed into the final slurry. In either case premature breaking of the emulsion before it has been applied to a road results in a weakened road surfacing. Therefore, a preferred method of inclusion of the breaking agent is to apply it to the road just prior to applying the slurry. Violent agitation of the slurry during screeding abrades the road surface and in so doing picks up and mixes the breaking agent into the slurry.

A tack coat can be applied to the road prior to the application of the slurry. If a breaking agent is being applied to the road independently of the slurry, as described above, the tack coat should be applied prior to this. The tack coat can be a bitumen, or polymer-modified bitumen, emulsion.

The slurry can include additional components that are standard in the microasphalt field, such as retarders and cement, which can be used in their standard amounts. The slurry can also include up to 20% by weight of water.

The slurry of the invention can be applied to a road using conventional microasphalt application techniques. However, it is preferable to modify the standard equipment to facilitate preparation and handling of the slurry of the invention. For example, a microasphalt processing and application machine typically comprises a storage hopper, a mixing unit and a laying box. The machine hopper can be modified to allow two or more separate aggregate fractions to be stored and delivered to the mixing unit via a common conveyor belt. This can be achieved by placing a longitudinal divider in the aggregate hopper to separate the two types of aggregate above the conveyor belt and along its length.

In addition, the processing machine can be fitted with spray nozzles for the application to the road of a breaking agent and/or a tack coat. The spray nozzles are located in front of the laying box so as to dispense their contents prior to the application of the slurry to the road. If both spray nozzles are present, that for the tack coat agent is located in front of that for the breaking agent.

The invention is now illustrated by the following examples in which all % are % by weight.

## Example 1

The following experiments were conducted to establish the viability of the invention under laboratory conditions.

## Ingredients

| | |
|---|---|
| 10 mm aggregate - | Bardon Hill Quarry clean washed |
| 0-3 mm aggregate - | Oxfordshire sand |
| O.P.C. - | Ordinary Portland Cement |
| Bitumen Emulsion - | Colas Ralumac Spring grade 1 |
| Bitumen Emulsion - | Colas Bitukold RS |
| Retarder - | Peral 417 |
| Retarder- | Empigen OB |
| Water - | Mains supply UK Southern Water |

The following table shows in what weight ratio the materials were mixed.

Table 1

| Experiment | Coarse Aggregate | Sand | O.P.C. | Emulsion | | Retarder | | Water |
|---|---|---|---|---|---|---|---|---|
| | | | | Ralumac | Bitukold | Peral 417 | Empigen | |
| 1 | 60.6 | 20.2 | 1.5 | 7.5 | | 0.2 | | 10 |
| 2 | 68.25 | 22.75 | 1.5 | 7.5 | | 0.2 | | 0-1 |
| 3 | 67.5 | 22.5 | 1.5 | 9 | | 0.2 | | 0-1 |
| 4 | 67.5 | 22.0 | 1.5 | | 9 | | 1.0 | 0-1 |
| 5 | 66.5 | 22.0 | 1.5 | | 8 | | 2.0 | 0-1 |
| 6 | 74.8 | 15.0 | 1.5 | 8 | | 0.2 | | 0-1 |

## Method

All the ingredients were mixed prior to adding the emulsion. The addition and mixing in of the emulsion and the application of the product into trays were designed to give the desired material thickness of 15 mm by screeding off the surplus; this was done as quickly as possible to simulate machine application (15 sec). The tray has dimensions 300 mm x 300 mm x 15 mm and is such to accommodate about 3 kg of material which can easily be hand mixed. After screeding the sample was hand rolled with a 100 mm steel roller some five times.

Experiment 1 - proved to be too wet and allowed most of the fine aggregate and emulsion to migrate towards the substrate.

Experiment 2 - resulted in a drier sample which produced the desired result, although some settling of the fine aggregate was evident.

Experiment 3 - produced a result with a higher bitumen content which appeared to be slightly bitumen rich.

Experiment 4 - using the thixotropic Bitukold emulsion increased the viscosity of the sample and reduced the tendency for the fines to settle. It was also noticed that the distribution of the fine aggregate was more uniform.

Experiment 5 - a reduced emulsion content using the Bitukold thixotropic emulsion and a higher retarder level gave an acceptable result but the cure time was increased to 30 minutes.

Experiment 6 - reduced fine aggregate content resulted in a weaker structure which was not acceptable.

Using the ASTM 2709 sand patch texture measurement process the following measurements were recorded.

Table 2

| Experiment Number | Texture Depth |
|---|---|
| 1 | N/A |
| 2 | 4.17 |
| 3 | 4.13 |
| 4 | 2.53 |
| 5 | 3.39 |
| 6 | N/A |

Experiments 2 to 5 gave acceptable results in the laboratory.

## Example 2

The following experiments were designed to prove the practicality of the invention and to verify the laboratory experiments under machine processing conditions.

## The Equipment

The equipment used was a small microasphalt processing and application machine equipped with a laying box 1.2 m wide. The laying box was equipped with two hydraulically powered, full width, distribution and mixing augers, of discontinuous design, one at the front of the box and the other at the rear. The machine is manufactured by Colas Ltd U.K. and sold as a Ralupath microasphalt footway surfacing applicator. A Bomag 120 Roller was used to compact the product.

## Equipment Modifications

The machine aggregate hopper system was modified such that two separate types and size ranges of aggregates could be stored and delivered to the mixing unit via the common conveyor belt.

This was achieved by placing a longitudinal divider in the hopper to separate the two types of aggregate above the conveyor belt and along its length.

Some 20 experiments were conducted using the following ingredients and methods.

## Material

| | |
|---|---|
| Coarse Aggregate - | 10 mm Clean Washed Bardon Hill |
| | 14 mm Clean Washed Bardon Hill |
| Bitumen Emulsion - | Ralumac Spring 1 grade |
| Thixotropic Agent - | CC2X |
| O.P.C. - | Ordinary Portland Cement |
| Retarder - | Peral 417 |
| Fine Aggregate - | 0-2 mm Moraine Sand |
| | 0-2 Oxfordshire Sand |

## Method

Slurry was applied in areas of $10m^2$ to $30m^2$ using conventional microasphalt application techniques.

The ratio of fine: coarse aggregate was adjusted by moving the hopper dividing plate transversely within the hopper.

The emulsion level was adjusted by varying the coarse aggregate delivery gate height and so the coarse aggregate flow rate, but maintaining the delivery of bitumen emulsion at a constant level.

For some experiments a thixotropic agent (CC2X) was used and this was added to the emulsion some 2 hours before the emulsion was introduced into the machine holding tank to ensure the thickening action had taken place.

After the slurry had been applied it was rolled using a Bomag 120 roller operating in vibration mode.

Rolling was conducted as soon as the emulsion was observed to break which was indicated by a colour change from brown to black.

## Results

Table 3 below shows a range of examples of slurry samples which were machine mixed and applied through the Colas Ralupath machine and subsequently rolled using the Bomag 120 vibrating roller.

Residual binder levels measured using the standard extraction technique were found to be of the order of some 5.5% to 6.5% by weight to give the best results, although acceptable structures could be achieved with a binder level of less than 5% bw.

It was found that the use of a thickening agent (CC2X) produced a better uniform distribution of the fine aggregate over the width of the applied surfacing than the slurries processed without a thickening agent. See experiments 5, 6 and 7.

The preferred ratio of the coarse (10 mm) to fine aggregate was in the range of 75:25 to 63:37 by volume; see experiments 1 to 11 and 18.

The preferred ratio of the coarse (14 mm) to fine aggregate was in the range 63:27 to 50:50 by volume; see experiments 12 to 17 and 10 to 21.

The size range of the fine aggregate was varied to improve the structural strength of the applied surfacing between 0 to 6 mm for a coarse aggregate size of 10 mm; see experiments 1 to 11 and 18.

The size range of the fine aggregate was varied to improve the mosaic strength of the applied surfacing between 0 to 10 mm for a coarse aggregate size of 14 mm; see experiments 12 to 13 and 19 to 21.

It was found that the higher the fine aggregate loading the lower the resulting texture depth. The limits were 40% fine aggregate by weight for 10 mm aggregate and 50% by weight for the 14 mm aggregate before texture depth levels were reduced to 1.5 mm. See experiments 10, 11 and 17. All other experiments result in texture depths greater than 2 mm.

The internal drainage capacity after application of the slurry was found to be present in all experimental samples except those with high fine aggregate levels. Typically it was above 40% for 10 mm coarse aggregate and some 50% for 14 mm coarse aggregate.

The internal drainage capacity was tested by applying water to the surface of the applied surfacing at a rate of 1 litre per minute. The surface was deemed to be porous if the area absorbing the applied water did not exceed 500 mm in diameter with no run off.

Slurries with high fine aggregate contents and texture depths close to 1.5 mm were dense and drainage occurred across the surface of the applied surfacing.

Experiments were also conducted to establish the advantages or otherwise of using a vibrating laying box plate as it was considered the action may improve material flow.

For the consistency indicated, the improvements were not measurable. However, observations suggest that some benefits may be gained with initial compaction of the product, and the action may also help to maintain the cleanliness of the working surfaces of the laying box for longer periods, so extending the time between cleaning of the laying box.

## Conclusions

Ideally a thickening agent was required to increase the viscosity to prevent drainage of the binder and migration of the fine aggregate by gravity to the substrate.

TABLE 3

EXPERIMENTAL RESULTS

| Exp | Coarse Aggregate | | Fine Aggregate | | Cement | Water | Dope | |
|---|---|---|---|---|---|---|---|---|
| | % | Grade | % | Grade | % | % | % | Type |
| 1 | 75 | 10 mm | 25 | 0+6 MOR | ≈2 | 0 | 0.5 | P |
| 2 | 75 | 10 mm | 25 | 0+6 MOR | ≈2 | 0 | 0.5 | P |
| 3 | 75 | 10 mm | 25 | 0+6 MOR | ≈2 | RAIN | 0.5 | P |
| 4 | 75 | 10 mm | 25 | 0+6 MOR | ≈2 | 0 | 0.5 | P |
| 5 | 75 | 10 mm | 25 | 0+6 MOR | ≈2 | 5 | 0.5 | P |
| 6 | 75 | 10 mm | 25 | 0+6 MOR | ≈2 | 5 | 0.5 | P |
| 7 | 75 | 10 mm | 25 | 0+6 MOR | ≈2 | 0 | 0.5 | P |
| 8 | 75 | 10 mm | 25 | OxSand | ≈2 | 0 | 0.5 | P |
| 9 | 75 | 10 mm | 25 | OxSand | ≈2 | 0 | 0.5 | P |
| 10 | 63 | 10 mm | 37 | OxSand | ≈2 | 0 | 0.5 | P |
| 11 | 63 | 10 mm | 37 | OxSand | ≈2 | 0 | 0.5 | P |
| 12 | 63 | 14 mm | 37 | OxSand | ≈2 | 0 | 0.5 | P |
| 13 | 63 | 14 mm | 37 | M+6 | ≈2 | 5 | 0.5 | P |
| 14 | 63 | 14 mm | 37 | M+6+10 30 | ≈2 | 5 | 0.5 | P |
| 15 | 63 | 14 mm | 37 | M+6+M | ≈2 | 0 | 0.5 | P |
| 16 | 63 | 14 mm | 37 | M+6+10 (50) | ≈2 | 0 | 0.5 | P |
| 17 | 50 | 14 mm | 50 | M+6+10 | ≈2 | 0 | 0.5 | P |
| 18 | 75 | 10 mm | 25 | OxSand | ≈2 | 0 | 0.5 | P |
| 19 | 50 | 14 mm | 50 | M+6 | ≈2 | 30 | 0.5 | P |
| 20 | 63 | 14 mm | 37 | M+6 | ≈2 | 30 | 0.5 | P |
| 21 | 75 | 14 mm | 25 | M+6 | ≈2 | 30 | 0.5 | P |

**TABLE 3 continued**

EXPERIMENTAL RESULTS

| Bitumen | Thixotrop | | Rolling | | Laying Box | | Texture Depth |
|---|---|---|---|---|---|---|---|
| Gate | % | Type | PED VIB | BOM AG 130V.B | 100Kg Static | 100Kg Dynamic | Sand Patch Method ASTM2709 |
| 80 | 0 | | ✓ | | ✓ | ✓ | 2.9 |
| 80 | 0 | | ✓ | | ✓ | ✓ | 3.5 |
| 90 | 0 | | ✓ | | ✓ | ✓ | 3.1 |
| 90 | 0 | | ✓ | | ✓ | ✓ | 3.5 |
| 90 | 2 | CC 2X | ✓ | | ✓ | ✓ | 3.9 |
| 90 | 2 | CC 2X | ✓ | | ✓ | ✓ | 3.8 |
| 90 | 2 | CC 2X | ✓ | | ✓ | ✓ | 4.0 |
| 90 | 0 | | ✓ | | ✓ | ✓ | 3.6 |
| 90 | 0 | | ✓ | | ✓ | ✓ | 3.4 |
| 90 | 0 | | ✓ | | ✓ | ✓ | 1.8 |
| 90 | 0 | | ✓ | | ✓ | ✓ | 1.6 |
| 90 | 0 | | ✓ | | ✓ | ✓ | 4.9 |
| 80 | 0 | | ✓ | | ✓ | ✓ | 5.2 |
| 80 | 0 | | ✓ | | ✓ | ✓ | 4.8 |
| 70 | 0 | | ✓ | ✓ | ✓ | ✓ | 4.8 |
| 80 | 0 | | | ✓ | ✓ | ✓ | 4.5 |
| 70 | 0 | | | ✓ | ✓ | ✓ | 1.76 |
| 80 | 0 | | | ✓ | ✓ | ✓ | 3.6 |
| 70 | 0 | | ✓ | | ✓ | | 4.5 |
| 70 | 0 | | ✓ | | ✓ | | 5.1 |
| 80 | 0 | | ✓ | | ✓ | | 5.8 |

## Example 3

The aim of these experiments was to establish the more effective means of promoting film build up of the emulsion on the surface of the aggregate with respect to cost and reaction time.

## The Materials

(1) Ralumac emulsion Spring grade 1
(2) Thixotropic agent CC2X
(3) Cellulose fibres INTERFIBRE X F55

## Equipment

Several 20 mm steel cubes each attached at one corner to 1 mm wire which enables them to be hung with one corner pointing upwards.

## Method

Three samples of emulsion were prepared

(a)

Control -     Ralumac emulsion
                    Spring 1 grade

(b) Ralumac emulsion (Spring grade 1) with 2% CC2X thixotrope which is considered to represent the limit of both handleability and cost. This was mixed some two hours before use to allow thickening to take place.

(c) Ralumac emulsion with 3% by weight low aspect ratio cellulosic fibres Interfibre XF55.

One cube was weighed and then just submerged in material sample (a) and then hung up by the attached wire to dry.

This procedure was repeated with a second cube for material sample (b).

This procedure was repeated with a third cube for material sample (c). The emulsion retained on the cubes was then allowed to dry. The cubes were then weighed again and the retained film weight calculated. The procedure was then repeated 3 times to establish an average.

## Results

The average retained weights of the respective samples were found to be as follows:

(a)

Control -     0.60 gms

(b)

Thixotrope -     1.20 gms

(c)

Fibres -     2.4 gms

## Conclusions

The use of fibres as a thickening agent was more effective than thixotropic agent CC2X (see above).

## Example 4

## Equipment

The equipment used was a standard Colas Microasphalt Ralumac machine designed and manufactured by Colas ltd. This was modified, to enable it to apply the textured microasphalt slurry, as follows:

Manufacturing and fitting a hopper insert to enable two different aggregate sizes to be ratioed and delivered to the mixer via the conveyor belt.

Using one of the cement hoppers to deliver the fibre addition, and modifying the delivery auger drive circuit to increase the delivery rate to a level that had been established by previous laboratory work, i.e. 3 kg/min. However the system was capable of delivering 5 kg/min.

Increasing the hydraulic system pressure to 160 bar to prevent the laying box paddles stalling.

Modifying the mixer outlet chute to improve flow to the laying box rear paddles.

Moving the laying box closer to rear of machine to increase slurry fall angle.

Reducing water and dope feed.

Using 2.5 m laying box and 3 m laying box fitted with rear auger.

## Materials

The materials used were as follows:

10 mm Bardon Hill aggregate

14 mm Bardon Hill aggregate

0-2 mm Moraine sand
0-2 mm Moraine + 6 mm Builth Wells aggregate
blended in a ratio of 50:50.
Ralumac Emulsion Spring 1 grade
Retarder - Peral 417
Cement - O.P.C.
Fibres - Cellulose low aspect ratio Interfibre XF55
Fibres - Sawdust up to 2 mm hard and soft wood.

## Materials

The slurry was applied using a conventional microasphalt application technique. The processed slurry was kept as "dry" as possible but with sufficient consistency to be screeded onto the substrate.

After screeding and as the emulsion was starting to break the surface was rolled using a Bomag 130 roller in vibrating mode.

## Results

See Table 4.

## Observations

Although the desired thickness of the applied surfacing layer was some 15-20 mm it was found that thicknesses of up to 50 mm could be applied with acceptable results. See experiments 3, 5 and 7.

Analysis of the applied coarse : fine aggregate ratio varies between 6:1 and 3:1. However the resultant surfacing was acceptable over this range.

The addition of fibrous material to the mixer, following the previously described lab work, proved conclusively that the addition of such materials gave the material the needed thickening required to prevent settling of the fine aggregate and run-off of the binder even when using wet, coarse aggregate and fine aggregate.

The addition of fibrous material also improved the distribution of the fine aggregate throughout the slurry.

If the fibres were not added then a high concentration of fine aggregate and binder would be observed throughout the central portion of the applied material.

All applied surfacings were successful.

It is clear that a controlled variation in coarse : fine aggregate ratio proves advantageous, and it was observed that different ratios produced not only changes in texture depth but resulted in changes in the internal strength of the applied surfacing. This is useful in enabling the slurry to cope with transitions from low stress rolling sites to highly stressed zones such as junctions and roundabouts.

**TABLE 4**

EXPERIMENTAL RESULTS

| Exp | Coarse Aggregate | | Fine Aggregate | | Cement | Water | Dope | |
|---|---|---|---|---|---|---|---|---|
| | % | Grade | % | Grade | % | % | % | Type Fibre |
| 1 | 82 | 10 mm | 18 | 0-3 | 1.5 | 0-1 | 0-1 | Peral |
| 2 | 88 | 10 mm | 12 | 0-3 | 1.5 | 0-1 | 0-1 | Peral |
| 3 | 85 | 10 mm | 15 | 0-3 | 1.5 | 0-1 | 0-1 | Peral |
| 4 | 84 | 10 mm | 16 | 0-3 | 1.5 | 0-1 | 0-1 | Peral |
| 5 | 75 | 10 mm | 25 | 0-3 | 1.5 | Rain | 0 | |
| 6 | 75 | 10 mm | 25 | 0-6 | 1.5 | Rain | 0 | |
| 7 | 80 | 10 mm | 20 | 0-3 | 1.5 | Rain | 0 | |
| 8 | 75 | 10 mm | 25 | 0-6 | 1.5 | Rain | 0 | |

**TABLE 4 continued**

EXPERIMENTAL RESULTS

| Bitumen | Thickener | | Rolling | | Laying Box | | Texture Depth |
|---|---|---|---|---|---|---|---|
| % | % | Type | PED VIB | BOM AG 130V.B | 2.5 m Std | 3.0 m with AUGER | Sand Patch Method ASTM2709 |
| 5.5 | 0.2 | Fibre | | ✓ | ✓ | | 3.3 |
| 5.8 | 0.2 | Fibre | | ✓ | ✓ | | 3.9 |
| 5.3 | 0.2 | Fibre | | ✓ | ✓ | | 5.4 |
| 5.5 | 0.3 | Wood | | ✓ | ✓ | | 5.6 |
| 5 | 0.5 | | | ✓ | ✓ | | 3.1 |
| 5 | 0.5 | | | ✓ | ✓ | ✓ | 3.96 |
| 5 | 0.5 | | | ✓ | | ✓ | 3.12 |
| 5 | 0.5 | | | ✓ | | | 3.16 |

## Example 5

The preferred breaking agent was applied to a naturally smooth substrate, e.g. 10 mm bituminous macadam dense wearing course at a rate of 0.5 l/m². A quantity of premixed slurry as in Example 1 experiment 3 was applied on top of the breaking agent. The slurry was contained in a frame to represent a laying box and vigorously agitated for 10 seconds with a spatula.

It was then rolled as described in Example 1. A series of experiments were conducted with and without the breaking agent.

The average breaking time for the emulsion binder was observed to be some 30% less for experiments conducted with the breaking agent.

A machine with modifications as described in Example 4 together with a hand spray facility (seed sprayer) were used to conduct a series of experiments.

The preferred breaking agent was sprayed onto the substrate, immediately after which the machine applied microasphalt slurries over the treated substrate.

The breaking time for the applied material was found to be some 30% faster than untreated areas.

## Example 6

In the following a filler is used to reduce the gaps between the particles of fine aggregate to a minimum and thereby increase the internal strength, but with a predictable reduction in texture depth.

A series of mixing tests were conducted in the laboratory based on the formulation below:

| | |
|---|---|
| 10mm Bardon Hill | 60 |
| 6 mm Bardon Hill | 16 |
| 0-2 mm Moraine Dust | 14 |
| Limestone Filler | 10 |
| Cellulosic Fibres | 0.3 p.h.a. |
| Ralumac Spring 1 Emulsion | 10.9 p.h.a. |
| Retarder/Dope Peral 417 | as required |

## Mixing Tests

A number of 300 gram laboratory mixes were produced using different retarder/dope and water contents then compacted so that mixing characteristics could be observed.

Mix 1 + 3% water (no dope)

Mixing of aggregates and emulsion difficult, emulsions broke during mixing ($\approx$ 20 seconds). Aggregate still partly uncoated.

Mix 2 + 4.6% dope solution (0.167% dope)

Mixing of aggregates and emulsion easier, but emulsion broken during mixing ($\approx$ 20 seconds). Aggregate not fully coated.

Mix 3 + 4.6% dope solution (containing 0.2% dope)

Mixing of aggregate with emulsion possible to produce fully coated aggregate. Workable for 1 minute.

Mix 4 + 6.0% dope solution (containing 0.5% dope)

Mixing of aggregate with emulsion even easier, to produce a workable microasphalt. Unworkable after 5 minutes. Clean water.

## Conclusions

(1) Increasing the retarder level increased the workability time.
(2) The resulting material from mixes 3 and 4 had good cohesion.
(3) The resulting material after compaction was very dense, estimated at 2% to 5% gaps.
(4) The resulting texture depth of the mix 4 was 1.2 mm.

### Example 7

A series of road trial experiments were conducted to establish the viability of the new formulation.

### Formulation

The proposed ingredient formulation was as follows:-

| | |
|---|---|
| 10 mm Aggregate | 60% |
| 6 mm Aggregate | 15% |
| 0.2 mm Moraine Sand | 15% |
| Limestone Filler L 90M | 10% |
| Bitumen Emulsion | 10.9% p.h.a. |
| Winter and Spring 1 grades Fibres Interfibre X F55 | 0.3% p.h.a. |

### Calibration of Machine

Limestone filler was delivered during 10 seconds with a delivery setting of 8 to give 13 kg thereof, which was a delivery rate of 78 kg per minute.

10 mm aggregate was delivered during 15 seconds for an inlet gate setting of 120 mm to give 175 kg thereof.

A mixture of the 10 mm aggregate + 6 mm aggregate/Moraine sand was delivered during 15 seconds for an exit gate setting of 175 mm to give 240 kg thereof. Therefore 65 kg of 6 mm Aggregate/Moraine mix was present. The ratio required was 160:80 therefore the inlet gate was adjusted to 110 to deliver that ratio.

The amount of mix delivered for a conveyor belt speed setting of 4.2 was 960 kg/min. The emulsion delivery rate was 100 kg/min. To give an emulsion level of 10.9% p.h.a. a total solids delivery of 917 kg at a total mix delivery of 837 kg/min was used. The belt speed setting was 3.6, although it was started at 3.8 which delivered some 950 kg/min giving a residual bitumen level of 6.7%.

### Experiments

Method -        The material was applied using a modified Ralumac machine, and subsequently rolled.
Condition -     Mild and Dry
                Road Temperature 10-12°C
                Air Temperature 10°C
Surface -       Open Macadam with high crown
Binder -        Ralumac winter grade

### Run 1

The material was found to be very rapid setting and after applying a few metres caused the mixer to seize.

### Run 2

The dope concentration was increased with prevented the mixer from seizing but resulted in a wetter mixed material. The applied surfacing suffered from central glazing and general fattiness with poor texture.

### Run 3

As run 2 but with reduced liquid (dope) addition. This resulted in an improvement but still not good as the applied surface was still glazed. As the emulsion-stone-filler combination was too reactive it was decided to change the emulsion supplied to Spring 1 grade.

### Experiment

Conditions -          Dry, overcast
                      Rain after R 6
                      Road Temperature 10°C
                      Air Temperature 8°C
Surface -             Previous trials
                      high centre crown
Bitumen Emulsion -    Spring 1 Grade

### Run 4

Same settings as Run 3 but using less dope. Material broke in laying box producing a very dry friable surface.

### Run 5

Reduced "filler" feed to setting 2, which resulted in applied material taking 1 hour to break and cure. Fine aggregate feed vibrator became detached from feed plate which resulted in insufficient fine aggregate being delivered.

### Run 6

Increased "filler" feed setting to 7 and reduced "Aggregate" delivery belt speed setting to 3.6. By using the minimum dope delivery consistent with acceptable early breaking time acceptable results were obtained. This run was rolled with an 8T rubber-tyred drum dead weight roller which seemed adequate.

### Results

To define the amount of segregation occurring in each run a 5 mm grading analysis was made of the machine mixed material; material from the centre of the run; and from the edge of the run. The results were expressed as a ratio of <5 mm to >5 mm, and are shown in Table 5 below.

Table 5

|         | Edge  | Centre | Machine Mix |
|---------|-------|--------|-------------|
| Run 1   | 29:71 | 41:59  | 37:63       |
| Run 2   | 21:79 | 52:48  | 38:62       |
| Run 3   | 24:72 | 45:55  | 34:66       |
| Run 4   | 32:68 | 40:60  | 36:64       |
| Run 5   | 22:78 | 29:71  | 26:74       |
| Run 6   | 31:69 | 38:62  | 35:65       |

### Texture Depth

Table 6 below indicates the texture depth obtained with Run 6.

Table 6

| Site | Run | Texture Depth |
|------|-----|---------------|
| 1 | 6 | 2.1 mm |
| 2 | 6 | 1.8 mm |
| 3 | 6 | 1.9 mm |

### Claims

1. A slurry comprising bituminous emulsion and relatively coarse and relatively fine aggregates that are present in relative amounts such that gaps exist between the particles of the aggregates.

2. A slurry according to claim 1, wherein the gaps comprise 3 to 25% by volume of the gaps existing in the absence of fine aggregate.

3. A slurry according to claim 1 or claim 2, wherein the ratio of coarse : fine aggregate is 1:10 to 10:1 by volume, preferably at least 1:1.

4. A slurry according to any preceding claim, wherein the coarse aggregate has a substantially uniform particle size of 6 to 20 mm, and the fine aggregate comprises material having a substantially uniform particle size of up to 3 mm.

5. A slurry according to claim 4, wherein the fine aggregate further comprises material having a substantially uniform particle size of greater than 3 mm and up to 10 mm.

6. A slurry according to any preceding claim, wherein the coarse and fine aggregates each have a substantially uniform particle size and the coarse aggregate is greater in particle size than the fine aggregate by at least 4 mm.

7. A slurry according to any preceding claim, further comprising up to 10% by weight of a filler wherein 90% by weight of the filler has a particle size of less than 100 $\mu$m and is smaller than the fine aggregate which has a substantially uniform particle size.

8. A slurry according to any preceding claim, further comprising a thickening agent, which preferably comprises fibrous material in an amount of up to 5% by weight of the total weight of the slurry, such fibrous material preferably comprising fibres having a length of up to 60 mm.

9. A slurry according to any preceding claim, further comprising a breaking agent.

10. A road surfacing obtainable by curing a slurry according to any preceding claim, the surfacing preferably having a sustainable texture depth of greater than 1.5 mm.

11. A method of road surfacing comprising applying to a road a slurry according to any one of claims 1 to 9 and allowing the slurry to cure, with the optional step of applying to the road a breaking agent prior to applying the slurry thereto, and with optional further step of applying a tack coat to the road prior to applying the slurry or breaking agent, if present, thereto.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-1 455 072 (TRAVAUX ET PRODUITS ROUTIERS) * abstract * | 1,3,9-11 | C08L95/00 E01C7/24 |
| X | BE-A-344 549 (KONINKLIJKE STEARIN KAARSENFABRIEK) * examples 1-2 * | 1,3,4,6 | |
| A | BE-A-903 034 (ENTREPRISES JEAN JOLY) * claims 1-3 * | 1,3,7, 10,11 | |
| A | GB-A-1 124 498 (LIMMER AND TRINITAD COMPANY LTD.) * page 1, line 29 - line 38 * * page 2, line 20 - line 38; claims * | 1,3,8, 10,11 | |
| A | US-A-3 276 888 (CECIL E. RHODES) | 1,8,10, 11 | |

TECHNICAL FIELDS SEARCHED (Int.Cl.6)

C08L

The present search report has been drawn up for all claims

| Place of search | Date of completion of the search | Examiner |
|---|---|---|
| THE HAGUE | 21 March 1995 | Girard, Y |